# EUROPEAN PATENT APPLICATION

(11) **EP 1 525 790 A2**
(43) Date of publication of application: **27.04.2005**
(21) Application number: 03380285.1
(22) Date of filing: 29.03.2004
(51) Int. Cl.: A01K 61/00

(54) **Floating round shaped compounds of fish cages**

(30) Priority: 21.10.2003 ES 200302520
(71) Applicant: Rodriguez Vazquez, Juan Ignacio, 15007 A Coruna (ES)
(72) Inventor: Rodriguez Vazquez, Juan Ignacio, 15007 A Coruna (ES)

(57) **Abstract**

*TECHNICAL SECTOR.*

The device described here belongs to the field of aquaculture. Growing up marine species for human feeding.

***State of the Art:***

At the moment, there are diferent sort of devices and projects for growing up fishes. Depending on the species, some are grown up in off shore cages at sea whereas others are grown in pools located in inland facilities.

There are some species of fish that are not able to be grown in cages. For instance turbot, which live on the bottom of the sea. In order to grow these species properly, big areas are required.

These kind of fish are grown in inland facilities in pools of about fifty and a hundred square meters each one and less than one meter deep.

Other species as salmon and sea bream are perfectly able to be grown in offshore sea cages, so the entrepreneurs avoid huge investments required for setting up large inland facilities.

These cages are shaped like big baskets with an upper floating structure. Such cage has a big volume with of up to fifteen meters height in the case of tuna. Despite the huge volume of these cages, they don't have area enough area for the turbot to live in.

## Description

There are a lot of inventions and experimental cages with the purpose of grow 'surface fish' as turbot in an offshore basis.

Some experimental projects are inspired by traditional cages with several storeys, thus increasing the surface. It is said that they didn't succeed due to problems feeding the fish.

As far as we know, there are a lot more research projects but we don't know them well.

### DESCRIPTION OF THE DEVICE

This device is a solution for the existing necessity of taking the production of flat fish like turbot out to the sea without having to purchase large inland premises along with all the works needed as well as water pumping and equipment for oxygenating the water.

It being made from polyethylene as well as its circular shape, will improve the strength of the device.

Moreover, the device will have several low depth pools such as those in the inland facilities.

The characteristics of the device, are:
1) Circular frames made of double polyethylene pipe. These structures will be concentric and will provide buoyancy to the system
2) Circular structures made of simple polyethylene pipe and placed above the level of the sea and above each buoyancy structure. These pipes will be used as handrail, and the net of the cages will be tied to them.
3) In order to keep each double structure and the handrail pipe together, polyethylene attachments will be used.
4) A batch of metallic radially orientated structures will keep the buoyancy frames in place adding strength to the system. Furthermore, these structures will be used as walkway and will have railings in order to hold a handrail.
5) The growing cages will be located in the space left by the structures described above, and will be square shaped. The cages will be tied to the buoyancy frames and walkways although the net will reach the handrails. They will be fixed to a metallic basket just at the bottom that will act as a weight keeping the net taut. The depth will be variable.

### Brief description of the drawings:

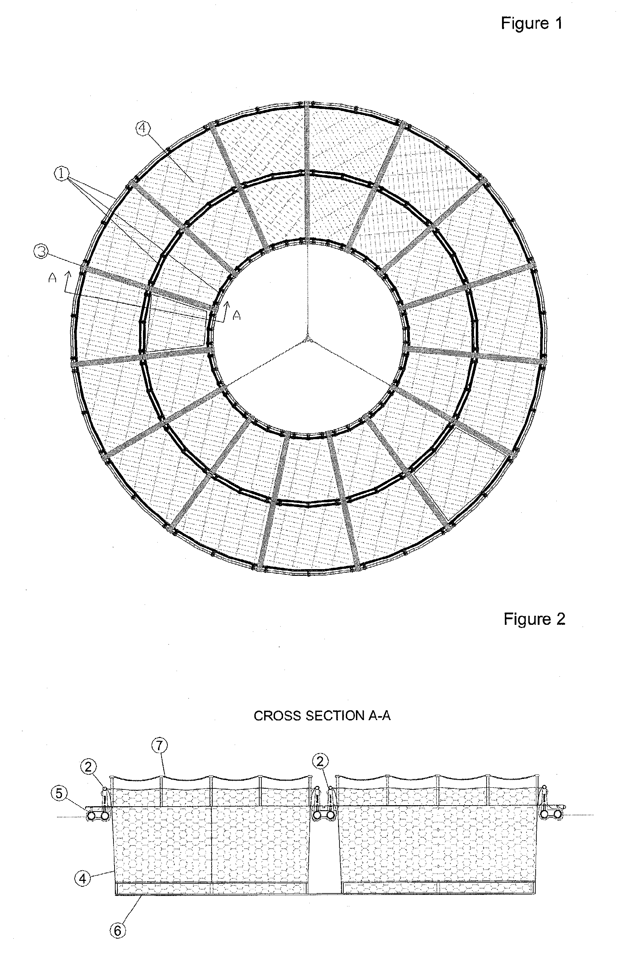

Figure 1 shows a plan view of the device.
Figure 2 shows a front view of the device.

1) Circular buoyancy frame of double polyethylene pipe.
2) Circular frame of simple polyethylene pipe as handrail.
3) Metallic walkways.
4) Fish Cages
5) Polyethylene Attachments.
6) Counterweight basket for cages
7) Railing for bulwark.

### Description of one example of device

One example of the floating round shaped compound of fish cages would comprise:
- Three circular buoyancy structures made of double polyethylene pipe of 250mm diameter (1). The outer one would be 59m diameter. The one in the middle 42, whereas the inner one will be 25m.
- About 1.15m above each one of these structures, another one would be placed, now with 110mm diameter of the single pipe, and would act as handrail.
- In order to keep those double buoyancy structures and the handrail in position, polyethylene attachments would be used (5)
- A batch of metallic structures radially orientated (3) would provide strength to the system. These structures would also act as walkways being 0.6 meters wide. Each walkway would have five railings (7) 1.15m height.
- The square cages would be placed in the space left between buoyancy structures(1) and walkways(4). Those cages would be completely made of net. In this example, there will be two tiers of cages (the inner and the outer one), as we have three buoyancy structures to contain them. These cages will be tied to the buoyancy pipes and walkway although the net will reach both handrails. These cages would be 3m depth. In order to stiffen the net, the cage would be reinforced by a metallic basket fixed to the bottom and being 0.5 meters height. Furthermore, the depth of these cages would be variable from 3 to 8 meters . The number of cages in this compound would be thirty, containing fifteen in each tier.

## Claims

1. Floating round shaped compound of fish cages comprising a group of buoyancy circular frames of double polyethylene pipe. Those structures will be concentric and there can be two or three of them.

2. A compound according to claim 1 characterised for having a circular frame of single polyethylene pipe placed above the buoyancy frames, acting as a railing and to which the net of the cages will be tied.

3. A compound of cages according to claim 1, **characterised by** having polyethylene attachments in order to fasten the buoyancy frame and the handrail.

4. A compound of cages according to any former claim characterised for having metallic structures radially oriented in order to provide strength to the device and acting also as a walkway. Those walkways will also have railings to hold a handrail.

5. A compound of cages according to any former claim characterised for having the square cages placed between the existing frames. These cages will be totally made of net. In order to keep the net taut, a metallic basket will be fixed at the bottom of each cage acting as stiffener and additional weight. Depending on the number of buoyancy frames, two or three, one or two tiers of cages respectively will be able to be placed.
